# EUROPEAN PATENT APPLICATION

(11) **EP 4 790 797 A1**
(43) Date of publication of application: **12.08.2026**
(21) Application number: 25867317.7
(22) Date of filing: 02.12.2025
(51) Int. Cl.: H01M 10/6568

(54) **BATTERY CELL UNIT AND BATTERY PACK**

(30) Priority: 06.12.2024 KR 20240180193; 27.11.2025 KR 20250183804
(71) Applicant: LG ENERGY SOLUTION, LTD., Seoul 07335 (KR)
(72) Inventor: KIM, Min Bum, Daejeon 34122 (KR); LEE, Hyoung Suk, Daejeon 34122 (KR); CHOI, Jong Hwa, Daejeon 34122 (KR); LIM, Chae Won, Daejeon 34122 (KR); JEONG, Su Jin, Daejeon 34122 (KR); HAM, Hyun Jun, Daejeon 34122 (KR)
(74) Representative: Plasseraud IP
(86) International application number: PCT/KR2025/020393
(87) International publication number: WO 2026/121786

(57) **Abstract**

The present disclosure provides a battery cell unit including: a plurality of battery cells; a battery cell unit frame that forms an accommodation space for the plurality of battery cells and seals the accommodated plurality of battery cells against the outside; and an insulating oil that is capable of cooling the plurality of battery cells and is hermetically injected into the accommodation space of the battery cell unit frame to immerse the plurality of battery cells, wherein the battery cell unit frame is provided with a cooling flow path penetrating therethrough through which coolant can flow in and out.

## Description

### [Technical Field]

The present disclosure relates to a battery cell unit and a battery pack, and more particularly, to a battery cell unit and a battery pack capable of enhancing the cooling effect throughout the entire battery cell unit.

This application claims the benefit of Korean Patent Application No. 10-2024-0180193, filed on December 6, 2024, and Korean Patent Application No. 10-2025-0183804, filed on November 27, 2025, the disclosures of which are incorporated herein by reference.

### [Background]

Batteries such as lithium-ion batteries have advantages including high energy density and operating voltage, and stable power capacity without memory effect, enabling long-term use. Accordingly, batteries are used as power sources in a wide range of fields, from various mobile electronic devices to recently electric vehicles and hybrid vehicles.

The basic structure of a battery consists of an electrode assembly composed of a positive electrode plate coated with a positive electrode active material, a negative electrode plate coated with a negative electrode active material, and a separator positioned between the positive and negative electrode plates to prevent electrical short circuits and allow lithium ions to pass through; a case that hermetically accommodates the electrode assembly; and an electrolyte injected into the case.

However, since the electrode assembly is sealed inside the case in a stacked state, if heat dissipation is not properly achieved, deterioration of the battery is induced, leading not only to a reduction in lifespan but also to a significant compromise in safety.

In batteries requiring rapid charging and discharging, such as those in electric vehicles or hybrid vehicles, a large amount of heat is generated in the process of providing instantaneous high output, making the need for effective heat dissipation even greater. If effective heat dissipation is not achieved, deterioration due to heat accumulation begins, and in severe cases, ignition or explosion may occur.

As such, since the heat generation issue in batteries is an important factor that determines lifespan and output, cooling technology that dissipates heat generated during battery use is extremely important.

In particular, in the case of battery packs to which pouch-type battery cells are applied, the pouch-type battery cells are cooled by applying a resin with high thermal conductivity between the pouch-type battery cells and a lower plate.

However, the cooling method only cools the lower part, and there is a problem that the cooling of the cell lead part, where the temperature rise is the highest, is negligible.

Accordingly, there is a demand for technology relating to a battery cell unit and a battery pack capable of enhancing the cooling effect throughout the entire battery cell unit including the cell lead part.

### [Summary]

### [Technical Problem]

The first technical problem to be achieved by the present disclosure is to provide a battery cell unit capable of enhancing the cooling effect throughout the entire battery cell unit.

The second technical problem to be achieved by the present disclosure is to provide a battery pack capable of enhancing the cooling effect throughout the entire battery cell unit.

### [Technical Solution]

In order to achieve the first technical problem, the present disclosure provides a battery cell unit including: a plurality of battery cells; a battery cell unit frame that forms an accommodation space for the plurality of battery cells and seals the accommodated plurality of battery cells against the outside; and an insulating oil that is capable of cooling the plurality of battery cells and is hermetically injected into the accommodation space of the battery cell unit frame to immerse the plurality of battery cells, wherein the battery cell unit frame is provided with a cooling flow path penetrating therethrough through which coolant can flow in and out.

In some embodiments, the insulating oil hermetically injected into the battery cell unit frame may further include a fire-extinguishing liquid capable of preventing thermal propagation.

In some embodiments, the plurality of battery cells includes an electrode assembly and an electrode lead part protruding from the electrode assembly, and the electrode lead part of the plurality of battery cells may be immersed in the insulating oil.

In some embodiments, a venting valve for the battery cell unit may be provided on the battery cell unit frame.

In some embodiments, the battery cell unit frame comprises a lower surface plate covering a lower surface, a side plate covering side surfaces, and an upper surface cover covering an upper surface, and the cooling flow path may be provided inside the lower surface plate.

In some embodiments, the cooling flow path may be further provided inside the side plate.

In some embodiments, the side plate comprises a pair of left and right side plates and a pair of front and rear side plates, and the cooling flow path provided inside the side plate may be provided inside the pair of left and right side plates.

In some embodiments, inlets and outlets of the cooling flow path may be provided on thickness surfaces of both edges of the lower surface plate and the side plate located in a direction in which the coolant flows in and out.

In order to achieve the second technical problem, the present disclosure provides a battery pack including: the battery cell unit; and a pack frame in which the battery cell unit is hermetically accommodated, wherein the pack frame is provided with a coolant inlet and a coolant outlet.

In some embodiments, the pack frame may include a battery pack venting valve.

### [Advantageous Effects]

The battery cell unit and battery pack according to embodiments of the present disclosure have the effect of enhancing the cooling effect throughout the entire battery cell unit including the electrode lead part.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view showing a battery cell unit according to an embodiment of the present disclosure.
FIG. 2 is a cross-sectional view showing a cross-section of the battery cell unit according to an embodiment of the present disclosure, cut along the cutting line A-B.
FIG. 3 is a partial enlarged view showing an enlarged portion indicated by a dashed-dotted line in FIG. 2.
FIG. 4 is a view showing the cooling flow path of the lower surface plate of the battery cell unit according to an embodiment of the present disclosure.
FIG. 5 is a view showing the cooling flow path of the side plate of the battery cell unit according to an embodiment of the present disclosure.
FIG. 6 is a view showing a state in which the upper part cover of the battery pack has been removed from the battery pack including the battery cell unit according to an embodiment of the present disclosure.
FIG. 7 is a view showing a battery pack including a battery cell unit according to an embodiment of the present disclosure.

### [Best Mode for Carrying out the Invention]

Hereinafter, preferred embodiments of the concept of the present disclosure will be described in detail with reference to the accompanying drawings. However, the embodiments of the concept of the present disclosure may be modified in various other forms, and the scope of the concept of the present disclosure should not be construed as being limited by the embodiments described below. The embodiments of the concept of the present disclosure are preferably construed as being provided to more completely explain the concept of the present disclosure to those of ordinary skill in the art. The same reference numerals denote the same elements throughout. Furthermore, various elements and regions in the drawings are schematically drawn. Therefore, the concept of the present disclosure is not limited by the relative sizes or spacings drawn in the accompanying drawings.

Terms such as first, second, etc. may be used to describe various components, but the components are not limited by these terms. These terms are used only for the purpose of distinguishing one component from another. For example, a first component may be named a second component, and conversely, a second component may be named a first component without departing from the scope of the concept of the present disclosure.

The terms used in the present application are used only to describe specific embodiments and are not intended to limit the concept of the present disclosure. Singular expressions include plural expressions unless the context clearly dictates otherwise. In the present application, expressions such as "comprise" or "have" are intended to designate that the features, numbers, steps, operations, components, parts, or combinations thereof described in the specification exist, and should be understood as not precluding in advance the possibility of existence or addition of one or more other features, numbers, operations, components, parts, or combinations thereof.

Unless otherwise defined, all terms used herein, including technical and scientific terms, have the same meaning as commonly understood by those of ordinary skill in the art to which the concept of the present disclosure belongs. In addition, terms as defined in dictionaries that are commonly used should be interpreted as having meanings consistent with the meanings they have in the context of the relevant technology, and should not be interpreted in an excessively formal sense unless explicitly defined herein.

Where an embodiment can be implemented differently, a specific process order may be performed differently from the described order. For example, two processes described consecutively may be performed substantially simultaneously, or may be performed in the reverse order of the described order.

In the accompanying drawings, variations in the illustrated shapes may be expected depending on, for example, manufacturing techniques and/or tolerances. Therefore, the embodiments of the present disclosure should not be construed as being limited to the specific shapes of the regions illustrated in the present specification, and should include, for example, changes in shape caused during the manufacturing process. All terms "and/or" used herein include each and every combination of one or more of the mentioned components. In addition, the term "substrate" as used herein may refer to the substrate itself, or a laminated structure including the substrate and a predetermined layer or film formed on its surface. Also, "the surface of a substrate" as used herein may refer to the exposed surface of the substrate itself, or the outer surface of a predetermined layer or film formed on the substrate.

### (First Embodiment)

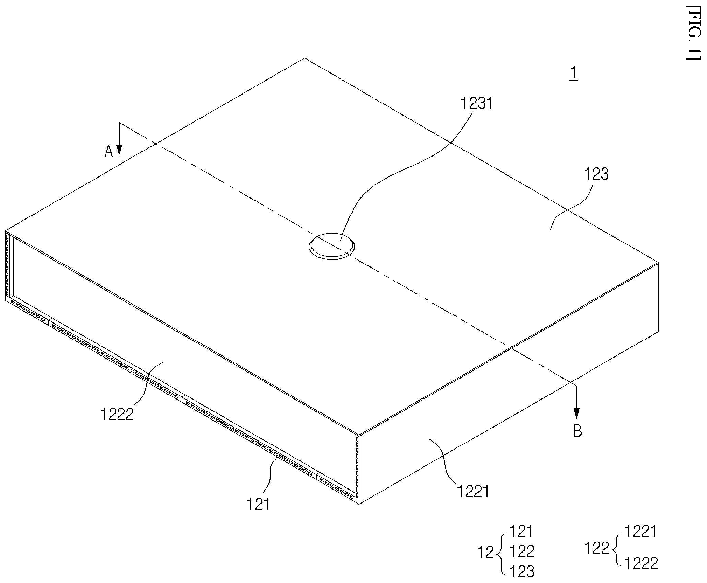

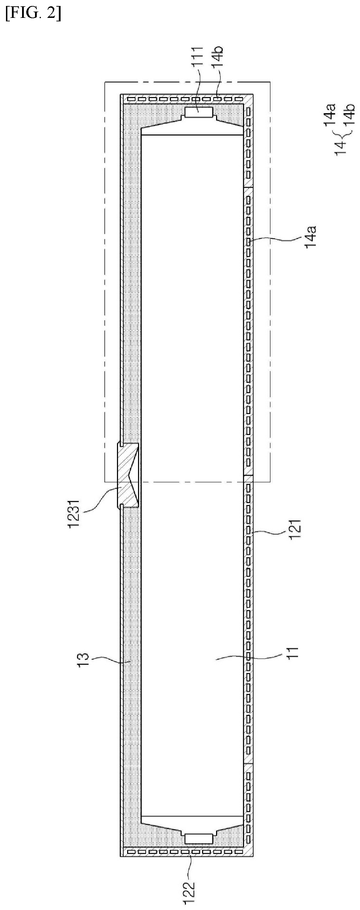

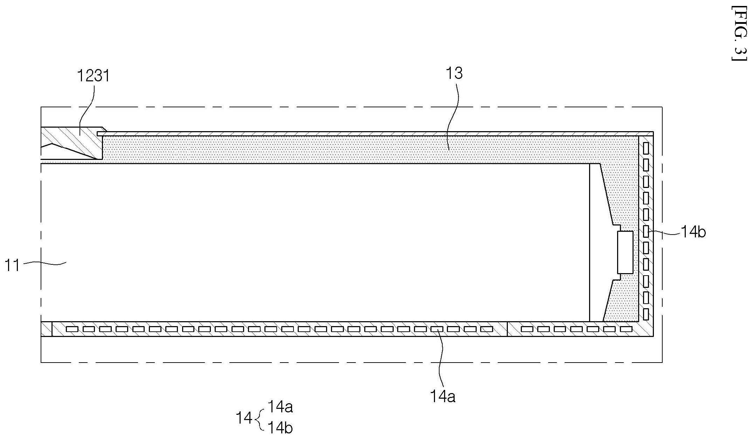

FIG. 1 is a perspective view showing a battery cell unit 1 according to an embodiment of the present disclosure, FIG. 2 is a cross-sectional view showing a cross-section of the battery cell unit 1 according to an embodiment of the present disclosure, cut along the cutting line A-B, and FIG. 3 is a partial enlarged view showing an enlarged portion indicated by a dashed-dotted line in FIG. 2.

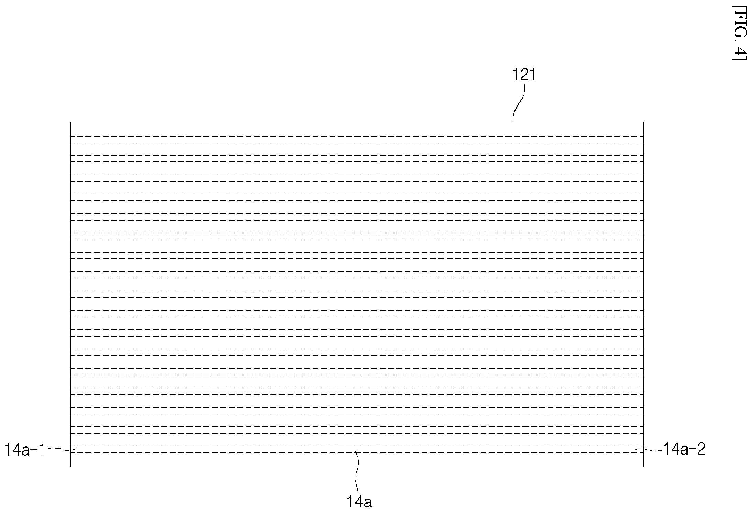

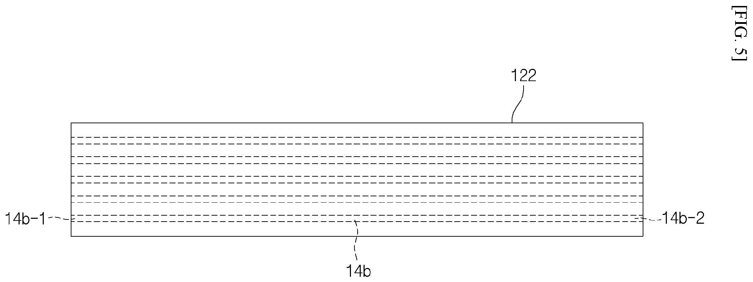

FIG. 4 is a view showing the cooling flow path 14a of the lower surface plate 121 of the battery cell unit 1 according to an embodiment of the present disclosure, and FIG. 5 is a view showing the cooling flow path 14b of the side plate 122 of the battery cell unit 1 according to an embodiment of the present disclosure.

Referring to FIGS. 1, 2, 3, 4, and 5, the battery cell unit 1 according to an embodiment of the present disclosure may include a plurality of battery cells 11, a battery cell unit frame 12, and insulating oil 13.

The battery cell unit frame 12 may form an accommodation space for the plurality of battery cells 11 and seal the accommodated plurality of battery cells 11 against the outside.

The insulating oil 13 may be hermetically injected into the accommodation space of the battery cell unit frame 12 to immerse the plurality of battery cells 11, and may cool the plurality of battery cells 11. The insulating oil 13 may be filled in the accommodation space of the battery cell unit frame 12 so as to surround the plurality of battery cells 11. The insulating oil 13 may be filled in the accommodation space of the battery cell unit frame 12 so as to be in contact with at least a part of the plurality of battery cells 11. For example, the insulating oil 13 may be filled in the accommodation space of the battery cell unit frame 12 so as to be in contact with the entire surface of the plurality of battery cells 11.

Any insulating oil known in the art may be employed as the insulating oil 13. The insulating oil 13 may refer to a liquid material used for the purpose of electrical insulation. The insulating oil 13 may serve the functions of electrical insulation, prevention of moisture ingress, and cooling. The insulating oil 13 may include a material with high thermal conductivity and heat capacity, and may serve the function of heat dissipation and cooling. The insulating oil 13 may be a material that is substantially non-reactive with the plurality of battery cells 11. For example, a highly refined, low-viscosity petroleum-based lubricating oil may be used as the insulating oil 13.

The insulating oil 13 may directly cool the plurality of battery cells 11. Heat generated from the plurality of battery cells 11 may be transferred to the insulating oil 13, and the plurality of battery cells 11 may be cooled through the insulating oil 13, whereby the temperature rise of the plurality of battery cells 11 can be mitigated (or suppressed). For example, the insulating oil 13 may be filled in the accommodation space of the battery cell unit frame 12 so as to be in contact with a specific portion (e.g., electrode lead part 111) where heat generation is relatively concentrated among the plurality of battery cells 11, and accordingly, the temperature rise at the specific portion (e.g., electrode lead part 111) among the plurality of battery cells 11 can be effectively mitigated (or suppressed).

The battery cell unit frame 12 may include a cooling flow path 14 penetrating therethrough through which coolant can flow in and out. The cooling flow path 14 may be formed in the battery cell unit frame 12, and the coolant may flow through the cooling flow path 14.

The battery cell unit frame 12 can prevent mixing of the coolant and the insulating oil 13, and can prevent external leakage of the insulating oil 13.

Since the insulating oil 13 includes an electrically insulating material, it can cool the plurality of battery cells 11 while preventing short circuits between the plurality of battery cells 11.

In some embodiments, the insulating oil 13 hermetically injected into the battery cell unit frame 12 may further include a fire-extinguishing liquid capable of preventing thermal propagation.

By further including a fire-extinguishing liquid capable of preventing thermal propagation, the insulating oil 13 hermetically injected into the battery cell unit frame 12 can prevent or delay fire even if the temperature of some of the plurality of battery cells 11 increases.

In some embodiments, the fire-extinguishing liquid may include compounds such as potassium chloride and carboxylate, but the present disclosure is not limited thereto.

In some embodiments, the fire-extinguishing liquid may include any material capable of suppressing the reaction of lithium and stabilizing the electrolyte to extinguish a fire.

Each of the plurality of battery cells 11 may include an electrode lead part 111, and the electrode lead part 111 may be immersed in the insulating oil 13. The electrode lead part 111 may be a component electrically connected to an external terminal. For example, each of the plurality of battery cells 11 may include an electrode assembly and the electrode lead part 111 protruding from the electrode assembly.

In some embodiments, the plurality of battery cells 11 are pouch-type cells, and the electrode lead parts 111 of the pouch-type cells may be immersed in the insulating oil 13. However, in the present disclosure, the plurality of battery cells 11 are not limited to pouch-type cells, and the plurality of battery cells 11 may be provided as prismatic cells, cylindrical cells, or various other types of cells.

The electrode lead part 111 may be immersed in the insulating oil 13, and accordingly, the electrode lead part 111 where heat is strongly generated can be cooled. In this case, short circuits between the plurality of battery cells 11 can be prevented due to the electrical insulating property of the insulating oil 13.

In some embodiments, a venting valve 1231 for the battery cell unit may be provided on the battery cell unit frame 12.

By providing the venting valve 1231 for the battery cell unit on the battery cell unit frame 12, gas that may be generated from the plurality of battery cells 11 can be easily discharged to the outside.

In some embodiments, the battery cell unit frame 12 may include a lower surface plate 121 covering the lower surface, a side plate 122 covering the side surfaces, and an upper surface cover 123 covering the upper surface, and the cooling flow path 14 may be provided inside at least one of the lower surface plate 121 and the side plate 122. For example, the cooling flow path 14 may be formed in the lower surface plate 121, or may be formed in the side plate 122, or may be formed in both the lower surface plate 121 and the side plate 122.

The coolant flowing through the cooling flow path 14 may indirectly cool the plurality of battery cells 11 and the insulating oil 13 inside the battery cell unit frame 12. Heat generated from the plurality of battery cells 11 may be transferred to the battery cell unit frame 12 through the insulating oil 13, and accordingly may be transferred to the coolant flowing through the cooling flow path 14 formed in the battery cell unit frame 12. The coolant can absorb the heat transferred through the battery cell unit frame 12 and dissipate it to the outside, and can perform a heat exchange function to maintain the temperature of the plurality of battery cells 11 stably.

In one embodiment, the cooling flow path 14 may be provided inside the lower surface plate 121 and the side plate 122, and in this case, the contact or flow area of the coolant is widened, which can be efficient for cooling the insulating oil 13 and the plurality of battery cells 11.

The cooling flow path provided in the lower surface plate 121 may be a lower surface cooling flow path 14a.

In some embodiments, the side plate 122 may include a pair of left and right side plates 1221 and a pair of front and rear side plates 1222, and the cooling flow path 14 provided in the side plate 122 may be provided inside the pair of left and right side plates 1221.

The cooling flow path provided in the side plate 122 may be a side cooling flow path 14b.

The side plate 122 may include a pair of left and right side plates 1221 and a pair of front and rear side plates 1222.

The pair of front and rear side plates 1222 may be disposed in a direction orthogonal to the coolant inflow direction.

The pair of left and right side plates 1221 may be disposed in the coolant inflow direction.

In some embodiments, the cooling flow path 14 provided in the side plate 122 may be provided inside the pair of left and right side plates 1221 disposed in the coolant inflow direction.

By providing the cooling flow path 14 in the side plate 122 inside the pair of left and right side plates 1221 disposed in the coolant inflow direction, the coolant can easily flow into the pair of left and right side plates 1221.

In some embodiments, inlets 14a-1, 14b-1 and outlets 14a-2, 14b-2 of the cooling flow path 14 may be provided on the thickness surfaces of both edges of the lower surface plate 121 and the side plate 122 located in the direction in which the coolant flows in and out.

By providing the inlets 14a-1, 14b-1 and outlets 14a-2, 14b-2 of the cooling flow path 14 on the thickness surfaces of both edges of the lower surface plate 121 and the side plate 122 located in the direction in which the coolant flows in and out, a cooling flow path 14 traversing the interior of the lower surface plate 121 and the side plate 122 is formed, thereby enhancing the cooling efficiency for the insulating oil 13 and the plurality of battery cells 11 (or the battery cell unit 1).

### (Second Embodiment)

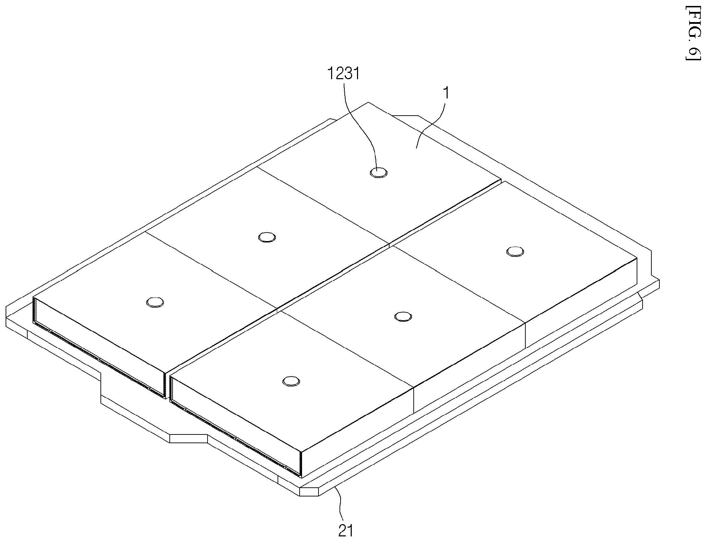

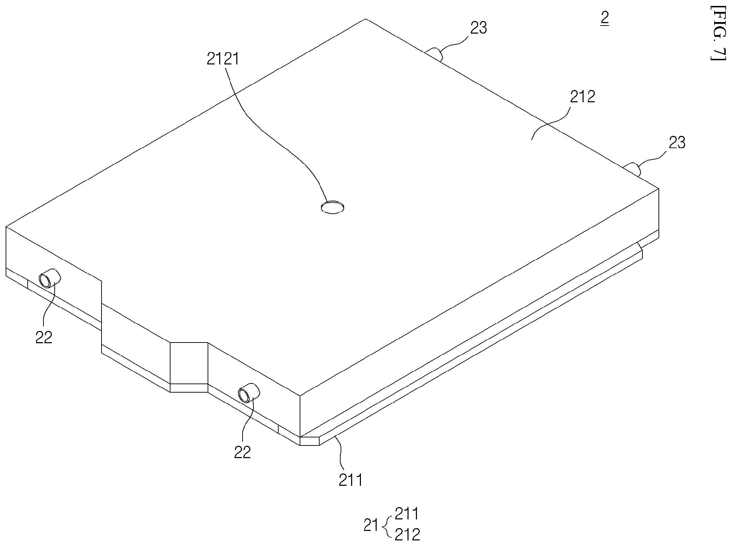

FIG. 6 is a view showing a state in which the battery pack upper part cover 212 has been removed from the battery pack 2 including the battery cell unit 1 according to an embodiment of the present disclosure, and FIG. 7 is a view showing the battery pack 2 including the battery cell unit 1 according to an embodiment of the present disclosure.

The battery pack 2 described with reference to FIGS. 6 and 7 may include the battery cell unit 1 described with reference to FIGS. 1 to 5. In the following, redundant descriptions are omitted or simplified.

Referring to FIGS. 1, 2, 6, and 7, the battery pack 2 according to an embodiment of the present disclosure may include a plurality of battery cell units 1 and a pack frame 21.

The pack frame 21 may hermetically accommodate the plurality of battery cell units 1.

The pack frame 21 may include a coolant inlet 22 and a coolant outlet 23.

In some embodiments, the battery pack 2 may include coolant that flows in and out to cool the plurality of battery cell units 1.

By the pack frame 21 having a coolant inlet 22 and a coolant outlet 23, the coolant can flow in through the coolant inlet 22 and flow out through the coolant outlet 23.

The coolant that has flowed into the pack frame 21 may flow in and out of the cooling flow path 14 provided in the battery cell unit frame 12.

In some embodiments, the cooling flow path 14 of the battery cell unit frame 12 may be formed in the direction of coolant inflow and outflow. Accordingly, the coolant can easily flow into the inlet of the battery cell unit frame 12 and can easily flow out through the outlet of the battery cell unit frame 12.

The coolant that has flowed into the inside of the pack frame 21 can cool the plurality of battery cells 11 and the insulating oil 13 accommodated in the battery cell unit frame 12. The plurality of battery cells 11 inside the battery cell unit frame 12 can be cooled by the insulating oil 13 and the coolant.

In some embodiments, the pack frame 21 may include a battery pack venting valve 2121. By the pack frame 21 including the battery pack venting valve 2121, gas that may be generated from the battery cell unit 1 can be easily discharged to the outside.

In some embodiments, the battery pack venting valve 2121 may be included in the battery pack upper part cover 212.

The plurality of battery cell units 1 may be disposed on the battery pack lower part plate 211 and may be sealed from the outside by the battery pack upper part cover 212.

The pack frame 21 may include a battery pack lower plate 211 and a battery pack upper part cover 212.

The battery pack upper part cover 212 may be detachably attached to the battery pack lower plate 211.

By the battery pack upper part cover 212 being detachably attached to the battery pack lower plate 211, all or some of the plurality of battery cell units 1 can be replaced.

While the embodiments of the present disclosure have been described in detail as above, those of ordinary skill in the art to which the present disclosure belongs will be able to implement the present disclosure in various modifications without departing from the spirit and scope of the present disclosure as defined in the appended claims. Therefore, modifications of future embodiments of the present disclosure will not be able to depart from the technology of the present disclosure.

## Claims

1. A battery cell unit comprising:
a plurality of battery cells;
a battery cell unit frame that forms an accommodation space for the plurality of battery cells and seals the accommodated plurality of battery cells against the outside; and
an insulating oil that is capable of cooling the plurality of battery cells and is hermetically injected into the accommodation space of the battery cell unit frame to immerse the plurality of battery cells, wherein
the battery cell unit frame comprises a cooling flow path penetrating therethrough through which coolant can flow in and out.

2. The battery cell unit of claim 1, wherein
the insulating oil hermetically injected into the battery cell unit frame further comprises a fire-extinguishing liquid capable of preventing thermal propagation.

3. The battery cell unit of claim 1, wherein
the plurality of battery cells comprises an electrode assembly and an electrode lead part protruding from the electrode assembly, and
the electrode lead part of the plurality of battery cells is immersed in the insulating oil.

4. The battery cell unit of claim 1, wherein
a venting valve for the battery cell unit is provided on the battery cell unit frame.

5. The battery cell unit of claim 1, wherein
the battery cell unit frame comprises a lower surface plate covering a lower surface, a side plate covering side surfaces, and an upper surface cover covering an upper surface, and
the cooling flow path is provided inside the lower surface plate.

6. The battery cell unit of claim 5, wherein
the cooling flow path is further provided inside the side plate.

7. The battery cell unit of claim 6, wherein
the side plate comprises a pair of left and right side plates and a pair of front and rear side plates, and
the cooling flow path provided inside the side plate is provided inside the pair of left and right side plates.

8. The battery cell unit of claim 6, wherein
inlets and outlets of the cooling flow path are provided on thickness surfaces of both edges of the lower surface plate and the side plate located in a direction in which the coolant flows in and out.

9. A battery pack comprising:
the battery cell unit according to any one of claims 1 to 8; and
a pack frame in which the battery cell unit is hermetically accommodated, wherein
the pack frame comprises a coolant inlet and a coolant outlet.

10. The battery pack of claim 9, wherein
the pack frame comprises a battery pack venting valve.
